**Europäisches Patentamt**

**European Patent Office**

**Office européen des brevets**

(19)

(11) Veröffentlichungsnummer: **0 051 078**

**A1**

(12)

# EUROPÄISCHE PATENTANMELDUNG

(21) Anmeldenummer: **80106699.4**

(22) Anmeldetag: **31.10.80**

(51) Int. Cl.³: **F 22 B 1/18**

(43) Veröffentlichungstag der Anmeldung:
**12.05.82 Patentblatt 82/19**

(84) Benannte Vertragsstaaten:
**BE FR GB IT NL SE**

(71) Anmelder: **Paul Lindenau GmbH & Co. KG Schiffswerft und Maschinenfabrik**
**Skagerrakufer 10**
**D-2300 Kiel 17(DE)**

(72) Erfinder: **Lindenau, Harald, Dipl.-Ing.**
**Skagerrakufer 10**
**D-2300 Kiel 17(DE)**

(74) Vertreter: **Hansmann, Dierk**
**Jessenstrasse 4**
**D-2000 Hamburg 50(DE)**

(54) **Dampfkessel für die Nutzung der Abgaswärme.**

(57) Bei diesem Dampfkessel wird über mindestens eine Rohrschlange (6) ein Abgaskanal (7) zur Dampferzeugung angeordnet. Die Rohrschlangen (6) sind mit einer Dampftrommel (1) über ein Fallrohr (8) verbunden, wobei das Fallrohr (8) mit einer Rückschlagklappe (9) versehen ist, so daß sich nur eine Richtung für die Wasserzufuhr ergibt. Das andere Ende der Rohrschlange (6) ist als Dampfleitung (11) wieder zur Dampftrommel (1) geführt. Durch diese Anordnung bleibt die gewünschte Umlaufrichtung erhalten und ein pulsierender Kreislauf entsteht.

EP 0 051 078 A1

./...

## Dampfkessel für die Nutzung der Abgaswärme

Die Erfindung bezieht sich auf einen Dampfkessel für die Nutzung der Abgaswärme von Dieselmotoren, Anlagen oder dergl., insbesondere für Schiffe, bestehend aus einer Verdampfungstrommel, die mit einem Wärmetauscher im Abgaskanal über ein Fallrohr und eine Dampfleitung verbunden ist und über eine Höhendifferenz einen Zulaufdruck erzeugt.

Kesselanordnungen zur Abgasnutzung sind bereits bekannt. Diese Anlagen arbeiten entweder mit natürlichem Wasserumlauf oder als Zwangsumlaufkessel, beispielsweise nach dem Benson- oder La Mont-Prinzip. Wasserrohrkessel dieser Art sind aber relativ aufwendig, da sie aus Ober- und Untertrommel sowie mit unbeheiztem Fallrohr gebildet werden bzw. für den Zwangsumlauf eine Umwälzpumpe erforderlich ist. Es ist deshalb der Aufwand für eine Abgasausnutzung im wesentlichen auf Dieselmotoren mit einer Leistung von über 4000 KW gerechtfertigt gewesen. Die Abgasausnutzung bei kleineren Motorleistungen mußte deshalb entfallen.

Die Aufgabe der Erfindung besteht darin, eine Kesselanordnung mit geringem Aufwand zu schaffen, die die Ausnutzung der Abgase bei kleineren Motorleistungen für die Dampferzeugung ökonomisch ermöglicht und einen natürlichen Kreislauf gewährleistet.

Die Lösung dieser Aufgabe erfolgt erfindungsgemäß dadurch, daß der Wärmetauscher durch eine oder mehrere parallel angeordnete Rohrschlangen gebildet ist, wobei im Fallrohr zu jeder Rohrschlange eine Rückschlagkappe angeordnet ist.

Hierdurch wird der Vorteil geschaffen, daß in den Rohrschlangen die gewünschte Umlaufrichtung erhalten bleibt und ein pulsierender Kreislauf entsteht. Die Rückschlagklappe schließt wenn eine entgegengesetzte Richtung eingenommen wird und das im Schlangensystem befindliche Wasser verdampft, bis die Druckverhältnisse es erlauben und Wasser wieder in die Rohrschlange eintritt. Es wird dadurch ohne eine Umwälzpumpe ein Zwangsumlauf ermöglicht, der somit auch die Ausnutzung der Abgase bei kleineren Motoren durchführbar macht.

Zur einfachen Ausgestaltung der Anordnung wird vorgeschlagen, daß jede Rohrschlange einen eigenen Kreislauf aufweist.

Weiterhin wird erfindungsgemäß vorgeschlagen, daß die Rohrschlangen in einem Temperaturbereich bis 500°C angeordnet sind. Hierdurch wird gewährleistet, daß die Rohrschlangen auch zeitweise ohne Wasserdampfinhalt gefahren werden können und das abgasumspülte Rohrmaterial keinen Schaden nimmt.

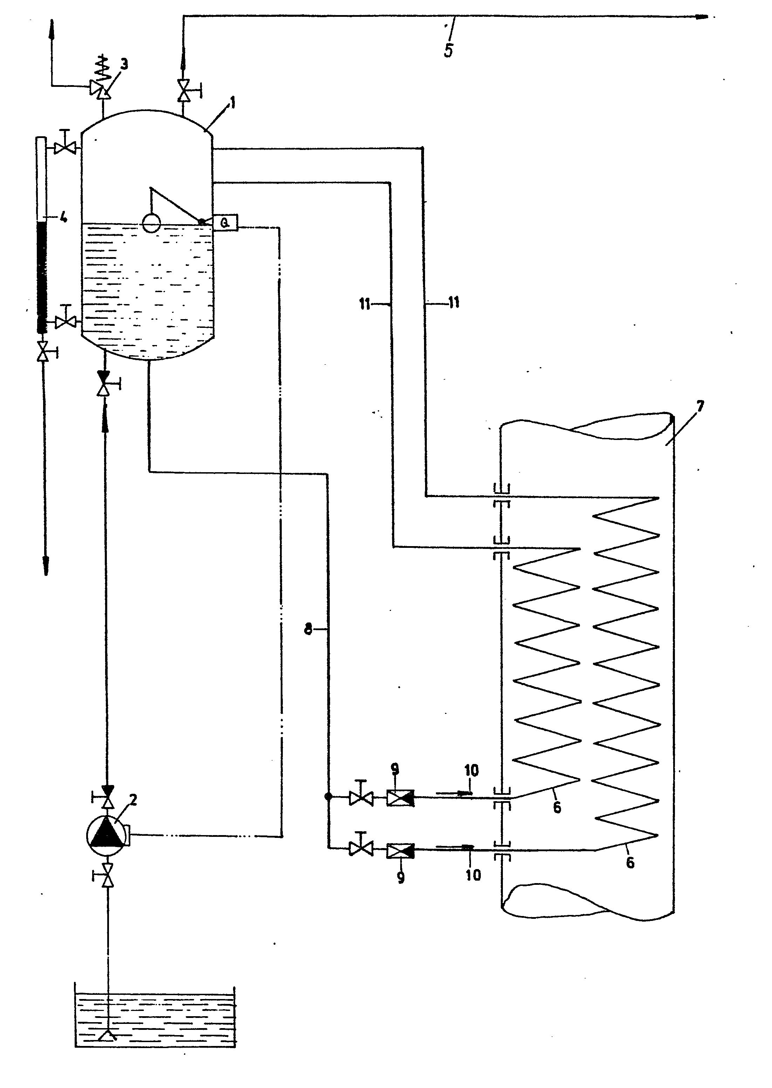

In der Zeichnung ist ein Ausführungsbeispiel einer erfindungsgemäßen Anordnung schematisch dargestellt.

Es ist eine Dampftrommel 1 mit einer Speisewasserzuführung und -Regelung über eine Pumpe 2, einem Sicherheitsventil 3 und einem Wasserstandsanzeiger 4 ausgerüstet. Weiterhin ist eine zum Verbraucher führende Ableitung 5 an die Dampftrommel 1 angeschlossen.

Zur Dampferzeugung sind parallel angeordnete Rohrschlangen 6 in einem Abgaskanal 7 angeordnet. Vor jeder Rohrschlange 6 sind Rückschlagklappen 9 angeordnet, die mit dem Fallrohr 8 verbunden sind und nur eine Wasserzufuhr in Pfeilrichtung 10 gestattet.

0051078

Das andere Ende der Rohrschlange 6 ist als Dampfleitung 11 wieder zur Dampftrommel 1 geführt.

Der Kreislauf wird dadurch ermöglicht, daß sich die
Rückschlagklappen 9 schließen, wenn der Bewegungsablauf sich umkehrt. Das in der Rohrschlange 6 befindliche Wasser verdampft, bis die vorhandenen Druckverhältnisse es erlauben, daß wieder Wasser in die Rohrschlange eintritt. Es entsteht gewissermaßen ein pulsierender Kreislauf, der jedoch bei Berücksichtigung
der Abmessungen der Rohrschlangen 6 sehr schnell vor
sich geht und infolgedessen eine kontinuierliche Dampferzeugung gewährleistet.

Patentansprüche

1. Dampfkessel für die Nutzung der Abgaswärme von Dieselmotoren, Anlagen oder dergleichen, insbesondere für Schiffe, bestehend aus einer Verdampfungstrommel, die mit einem Wärmetauscher im Abgaskanal über ein Fallrohr und eine Dampfleitung verbunden ist und über eine Höhendifferenz einen Zulaufdruck erzeugt, dadurch gekennzeichnet, daß der Wärmetauscher durch eine oder mehrere parallel angeordnete Rohrschlangen (6) gebildet ist, wobei im Fallrohr (8) zu jeder Rohrschlange (6) eine Rückschlagklappe (9) angeordnet ist.

2. Dampfkessel nach Anspruch 1, dadurch gekennzeichnet, daß jede Rohrschlange (6) einen eigenen Kreislauf aufweist.

3. Dampfkessel nach Anspruch 1 und 2, dadurch gekennzeichnet, daß die Rohrschlangen (6) in einem Temperaturbereich bis 500°C angeordnet sind.

0051078

**Europäisches Patentamt**

## EUROPÄISCHER RECHERCHENBERICHT

| Kategorie | Kennzeichnung des Dokuments mit Angabe, soweit erforderlich, der maßgeblichen Teile | betrifft Anspruch |
|---|---|---|
| X | DE - C - 596 805 (STIERLE) <br> * Insgesamt * <br><br> -- | 1 |
| | US - A - 2 031 423 (KEENAN) <br> * Seite 1, linke Spalte, Zeilen 50-55; rechte Spalte; Seite 2, linke Spalte, Zeilen 1-7, 46-58; Figuren * <br><br> -- | 1,2 |
| A | FR - A - 688 111 (CABELL) <br><br> ---- . | |

**EINSCHLÄGIGE DOKUMENTE**

KLASSIFIKATION DER ANMELDUNG (Int. Cl.³)

F 22 B 1/18

RECHERCHIERTE SACHGEBIETE (Int. Cl.³)

F 22 B

KATEGORIE DER GENANNTEN DOKUMENTE

X: von besonderer Bedeutung
A: technologischer Hintergrund
O: nichtschriftliche Offenbarung
P: Zwischenliteratur
T. der Erfindung zugrunde liegende Theorien oder Grundsätze
E: kollidierende Anmeldung
D: in der Anmeldung angeführtes Dokument
L. aus andern Grunden angefuhrtes Dokument
&. Mitglied der gleichen Patentfamilie. übereinstimmendes Dokument

Der vorliegende Recherchenbericht wurde für alle Patentanspruche erstellt

| Recherchenort | Abschlußdatum der Recherche | Prüfer |
|---|---|---|
| Den Haag | 30-06-1981 | V. GHEEL |

EPA form 1503.1   06.78